# EUROPÄISCHE PATENTSCHRIFT

(11) **EP 1 470 031 B1**
(45) Veröffentlichungstag und Bekanntmachung des Hinweises auf die Patenterteilung: **10.09.2008**
(21) Anmeldenummer: 03708049.6
(22) Anmeldetag: 09.01.2003
(51) Int. Cl.: B60S 3/00

(54) **VERFAHREN UND VORRICHTUNG ZUM TROCKNEN VON FAHRZEUGEN**
METHOD AND DEVICE FOR DRYING VEHICLES
PROCEDE ET DISPOSITIF POUR SECHER DES VEHICULES

(30) Priorität: 23.01.2002 DE 10202375
(43) Veröffentlichungstag der Anmeldung: 27.10.2004
(73) Patentinhaber: WashTec Holding GmbH, 86153 Augsburg (DE)
(72) Erfinder: WIMMER, Georg, 86444 Affing (DE); ZEYER, Pierre, F-68500 Wuenheim (FR)
(74) Vertreter: Schwarz, Thomas
(86) Internationale Anmeldenummer: PCT/EP2003/000130
(87) Internationale Veröffentlichungsnummer: WO 2003/062028

(56) Entgegenhaltungen:
- DE-A- 3 535 782
- US-A- 4 872 238
- US-A- 5 367 739
- US-A- 6 000 095
- US-A- 6 154 916
- US-A1- 2002 157 208

## Beschreibung

Die Erfindung betrifft ein Verfahren und eine Vorrichtung zum Trocknen von Fahrzeugen nach dem Oberbegriff der Ansprüche 1 bzw. 6.

Bei herkömmlichen Trocknungsvorrichtungen für Fahrzeuge sind üblicherweise horizontal oder vertikal angeordnete Trocknungsdüsen mit in der Regel schlitzfömigen Luftaustrittsöffnungen vorgesehen, durch welche der von einem Gebläse erzeugte Luftstrom auf die oberen und seitlichen Flächen des Fahrzeugs gerichtet wird. Derartige Trocknungsdüsen weisen vielfach eine fest vorgegebene Ausrichtung auf. Es sind aber auch bereits Vorrichtungen zu Trocknen von Fahrzeugen bekannt, bei denen die Trocknungsdüsen mit ihren schlitzförmigen Luftaustrittsöffnungen gekippt oder verschwenkt werden können, um die Trocknung zu verbessern.

Aus der DE 199 16 654 C2 ist eine Trocknungsvorrichtung bekannt, die ein quer zur Fahrzeuglängsrichtung verlaufendes und um eine horizontale Längsachse drehbares Düsengehäuse mit einer sich quer zur Fahrzeuglängsrichtung erstreckenden schlitzförmigen Austrittsdüse aufweist. Durch eine derartige Verstellmöglichkeit kann zwar die Austrittsrichtung der Luftaustrittsdüse an die Fahrzeugkontur angepaßt werden, das auf dem Fahrzeug befindliche Wasser muß allerdings über das gesamte Fahrzeug von vorne nach hinten oder umgekehrt transportiert werden.

Aus der US 6 154 916 A ist eine Trocknungseinrichtung bekannt, bei der an den Seitenwänden eines portalartigen Luftführungskanals mehrere Öffnungen mit inneren Rohrstutzen vorgesehen sind. In den Rohrstutzen sind Trocknungsdüsen über zwei seitliche Halteschrauben schwenkbar angelenkt. Die an den gegenüberliegenden Seitenwänden angeordneten Trocknungsdüsen werden durch jeweils einen Antriebsmotor über einen Exzenterantrieb und ein aufwändiges Gestänge geschwenkt. Allerdings verändert sich mit der Schwenkbewegung der Trocknungsdüsen auch deren Blaswirkung, da der Luftstrahl bei nach oben oder nach unten verschwenkter Düse einen weiteren Weg zum Fahrzeug zurücklegen muss als bei der horizontalen Mittelstellung.

Aufgabe der Erfindung ist es, ein Verfahren und eine Vorrichtung zum Trocknen von Fahrzeugen zu schaffen, die mit einer konstanten Blaswirkung der Trocknungsdüse einen schnelleren Abtransport des Wassers und damit eine effektivere Trocknung ermöglichen.

Diese Aufgabe wird durch ein Verfahren mit den Merkmalen des Anspruchs 1 und durch eine Vorrichtung mit den Merkmalen des Anspruchs 6 gelöst. Zweckmäßige Ausgestaltungen und vorteilhafte Weiterbildungen der Erfindung sind in den Unteransprüchen angegeben.

Das Konzept der Erfindung besteht darin, dem in Längsrichtung des Fahrzeugs relativ bewegten Luftstrom eine zusätzliche Bewegungskomponente in Querrichtung der zu trocknenden Fahrzeugflächen zu verleihen. Dadurch kann das auf den Fahrzeugflächen befindliche Wasser relativ schnell und effektiv nach unten oder zur Seite abtransportiert werden, wodurch eine besonders schnelle und gründliche Trocknung erreichbar ist. Bei Verwendung des erfindungsgemäßen Konzeptes zur Trocknung der Fahrzeugseitenflächen kann z.B. in Verbindung mit der Fahrzeug- oder Portalbewegung eine Luftauftreffläche auf dem Fahrzeug erzeugt werden, die sich von hinten oben nach vorne unten bewegt. In einer besonders zweckmäßigen Ausführung werden mehrere voneinander beabstandete Trocknungsdüsen bewegt, wodurch auch eine größere Fahrzeugfläche auf besonders effektive Weise abgedeckt werden kann. Ein weiterer Vorteil des erfindungsgemäßen Konzeptes besteht darin, daß aufgrund des beweglichen Luftaustritts ein konzentrierter Luftstrom mit großer Wurfweite im Vergleich zu den schlitzförmigen Trocknungsdüsen ermöglicht wird.

Die zusätzliche Querbewegung kann z.B. bei einer Seitentrocknung dadurch erreicht werden, daß mehrere voneinander beabstandete Trocknungsdüsen an der Seitenwand eines gegenüber dem Fahrzeug in Längsrichtung relativ bewegten Luftkastens an diesem vertikal nach unten verfahren werden. Hierzu können die Trocknungsdüsen über ein Transportband vertikal verfahrbar an einem seitlichen Luftkasten angeordnet sein. Eine zusätzliche Querbewegung kann aber auch durch Drehung der Trocknungsdüsen um eine zu ihrer Austrittsöffnung seitlich versetzte Drehachse erreicht werden.

Zur Steuerung der Bewegungsrichtung des Luftstromes sind an den drehbaren Trocknungsdüsen verstellbare Schieberplatten vorgesehen, durch welche die Luftzufuhr zu den Trocknungsdüsen nur innerhalb eines gewünschten Bereichs freigegeben wird. Dadurch kann erreicht werden, daß z.B. die an einer Seitenfläche des Fahrzeugs in einer Vertikalebene kreisförmig bewegten Trocknungsdüsen nur bei ihrer Abwärtsbewegung mit Trocknungsluft versorgt werden. Auf diese Weise kann auch ohne erhöhte Gebläseleistung ein schneller und effektiver Abtransport des Wassers nach unten erreicht werden.

Bei einer mit Drehdüsen versehenen Ausführung der Erfindung sind auf einer an dem Luftkasten drehbaren Scheibe zwei von deren Drehachse beabstandete und gegenüberliegende Trocknungsdüsen mit entgegengesetzt geneigten Austrittsöffnungen angeordnet. Zweckmäßigerweise sind mehrere voneinander beabstandete Scheiben mit gegenüberliegenden Trocknungsdüsen vorgesehen, die durch einen gemeinsamen Antrieb gedreht werden. Die Trocknungsdüsen zweier untereinander angeordneter Scheiben sind in vorteilhafter Weise um 90° zueinander versetzt, so daß sich eine optimale Übergabe der Wassertropfen von den Luftdüsen der oberen Scheibe an die Luftdüsen der unteren Scheibe ergibt. Auf diese Weise kann ein kontinuierlicher Wassertransport sichergestellt werden. Wird die Luftauftreffläche am Fahrzeug betrachtet, ergibt sich durch die Drehung der Trocknungsdüsen in Verbindung mit der relativen Verfahrbewegung des Luftkastens in Längsrichtung des Fahrzeugs eine sichelförmige Fläche, wobei die am Fahrzeug auftreffende Sichelfläche im unteren Fahrzeugbereich der Auftreffläche im oberen Fahrzeugbereich nacheilt. Durch einen Anstellwinkel der Düsenaustrittsöffnungen zur Rotationsachse ergibt sich zusätzlich ein Schälwinkel in Bezug auf die Fahrzeugoberfläche.

Zur Reduzierung der Baugröße kann aber auch nur eine Trocknungsdüse pro Rotationsachse eingesetzt werden. Um bei einer vollen Umdrehung einer derartigen Austrittsdüse einen Luftaustritt nur in einem Winkelbereich von 180° zu erreichen, kann auch hier eine Schieberplatte vorgesehen werden, durch welche der Luftzugang zur Trocknungsdüse in Abhängigkeit von der Drehstellung geöffnet oder geschlossen wird. Die Verstellung der Schieberplatte kann zweckmäßigerweise mit dem Drehantrieb der Trocknungsdüse gekoppelt sein.

Weitere Besonderheiten und Vorzüge der Erfindung ergeben sich aus der folgenden Beschreibung vorteilhafter Ausführungsbeispiele anhand der Zeichnung. Es zeigt:
- **Figur 1**: eine erste Ausführungsform einer erfindungsgemäßen Trocknungsvorrichtung mit translatorisch bewegbaren Trocknungsdüsen in einer Vorderansicht;
- **Figur 2**: die Trocknungsvorrichtung von Figur 1 in einer Seitenansicht;
- **Figur 3**: eine zweite Ausführungsform einer erfindungsgemäßen Trocknungsvorrichtung mit rotatorisch bewegbaren Trocknungsdüsen in einer zum Teil geschnittenen Vorderansicht;
- **Figur 4**: die Trocknungsvorrichtung von Figur 3 in einer Seitenansicht;
- **Figur 5**: eine dritte Ausführungsform einer erfindungsgemäßen Trocknungsvorrichtung in einer zum Teil geschnittenen Seitenansicht und
- **Figur 6**: die Ausführungsform von Figur 5 ohne Trocknungsdüse in einer Vorderansicht.

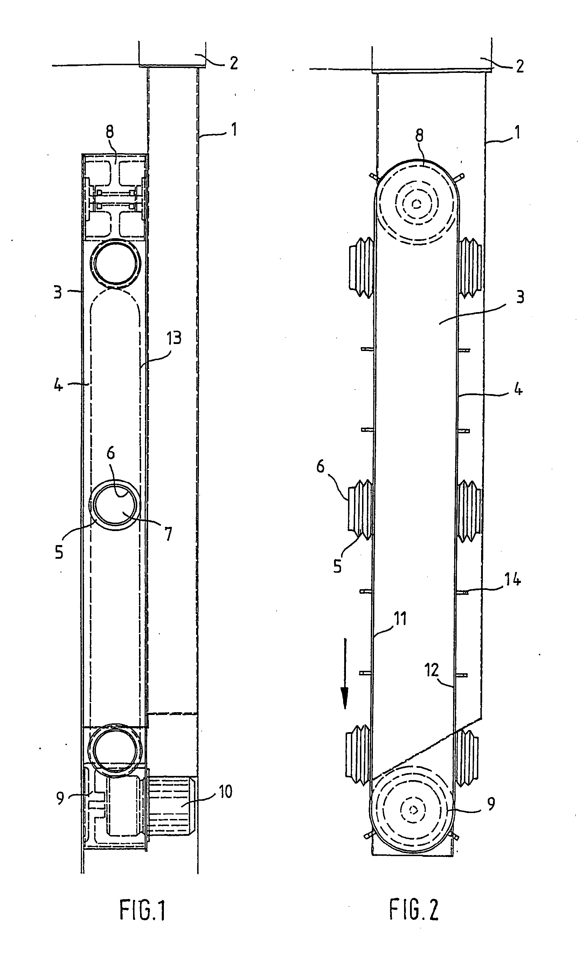

In den Figuren 1 und 2 ist eine als Bandtrockner ausgeführte Trocknungsvorrichtung für Fahrzeuge gezeigt. Sie enthält einen als Luftführungskanal dienenden Luftkasten 1, der an das Gehäuse eines nur schematisch angedeuteten Gebläses 2 angeflanscht ist und von diesem mit Trocknungsluft gespeist wird. An einem zur Seite vorstehenden Luftkastenteil 3 des langgestreckten Luftkastens 1 ist ein als Endlosband ausgeführtes und in Längsrichtung des Luftkastens 1 verlaufendes Transportband 4 mit mehreren voneinander beabstandeten Trocknungsdüsen 5 angeordnet. Bei der gezeigten Ausführung bestehen die Trocknungsdüsen 5 aus einem an der Außenseite des Transportbandes 4 angebrachten Düsenkörper mit einer kreisrunden Düsenaustrittsöffnung 6 und einem entsprechenden runden Durchlaß 7 im Transportband 4. Das Transportband 4 verläuft über eine am oberen Ende des Luftkastenteils 3 angeordnete Umlenkrolle 8 und eine am unteren Ende des Luftkastenteils 3 angeordnete Antriebsrolle 9, die von einen Motor 10 angetrieben wird.

Zwischen der Umlenkrolle 8 und der Antriebsrolle 9 liegt das Transportband 4 auf zwei gegenüberliegenden Seitenwänden 11 und 12 des mit Trocknungsluft versorgten Luftkastenteils 3 auf. In der dem Fahrzeug zugewandten Seitenwand 11 des Luftkastenteils 3 ist eine - in Figur 1 gestrichelt dargestellte - langgestreckte Öffnung 13 vorgesehen, durch welche die über die Seitenfläche 11 geführten Trocknungsdüsen 5 innerhalb eines vorgegeben Bereichs mit der Trocknungsluft versorgt werden. Auf diese Weise werden die Trocknungsdüsen 5 nur bei ihrer bewegung entlang der dem Fahrzeug zugewandten Seitenwand 11 im Bereich der Öffnung 13 mit Druckluft versorgt, während sie bei Ihrer Bewegung entlang der dem Fahrzeug abgewandten Seitenwand 12 von der Druckluftversorgung abgetrennt sind. An der Außenseite des Transportbandes 4 sind zwischen den Trocknungsdüsen 5 nach außen vorstehende Ansätze 14 zur Stabilisierung des Transportbandes 4 vorgesehen. Durch diese stabilisierenden Ansätze 14 wird ein durch den Innendruck im Luftkastenteil 3 bedingtes Abheben des Transportbandes 4 von der Seitenwand 11 im Bereich der Öffnung 13 und damit ein unerwünschter Austritt der Trocknungsluft verhindert.

Zur Trocknung der seitlichen Flächen eines Fahrzeuges in einer Fahrzeugwaschanlage können derartige Trocknungvornchtungen mit den linear bewegten Trocknungsdüsen z.B. an der rechten und linken Seite eines Fahrportals oder auch an stationären Seitenträgern innerhalb einer Waschstraße vertikal angeordnet sein. Die auf die Seitenflächen des Fahrzeugs gerichteten und gemäß Figur 2 in Pfeilrichtung von oben nach unten linear bewegten Trocknungsdüsen 5 erzeugen in Verbindung mit der Portalfahrbewegung innerhalb einer Portalwaschanlage oder der Fahrzeugbewegung innerhalb einer Waschstraße eine bezogen auf die Fahrzeugseitenfläche schräg von oben nach unten verlaufende Luftauftreffläche, durch welche das auf den seitlichen Fahrzeugflächen befindliche Restwasser schräg von oben nach unten abtransportiert wird. Durch die während ihrer Relativbewegung in Längsrichtung Die vorstehend beschriebene Trocknungsvorrichtung kann aber auch in einer horizontalen Anordnung zum Trocknen der oberen Fahrzeugflächen wie z.B. der Motorhaube, der Front-und Heckscheiben, des Dachs und des Fahrzeughecks eingesetzt werden. Durch entsprechende Anordnung der Trocknungsvorrichtung kann dabei das Wasser von innen nach außen oder auch zur Seite transportiert werden.

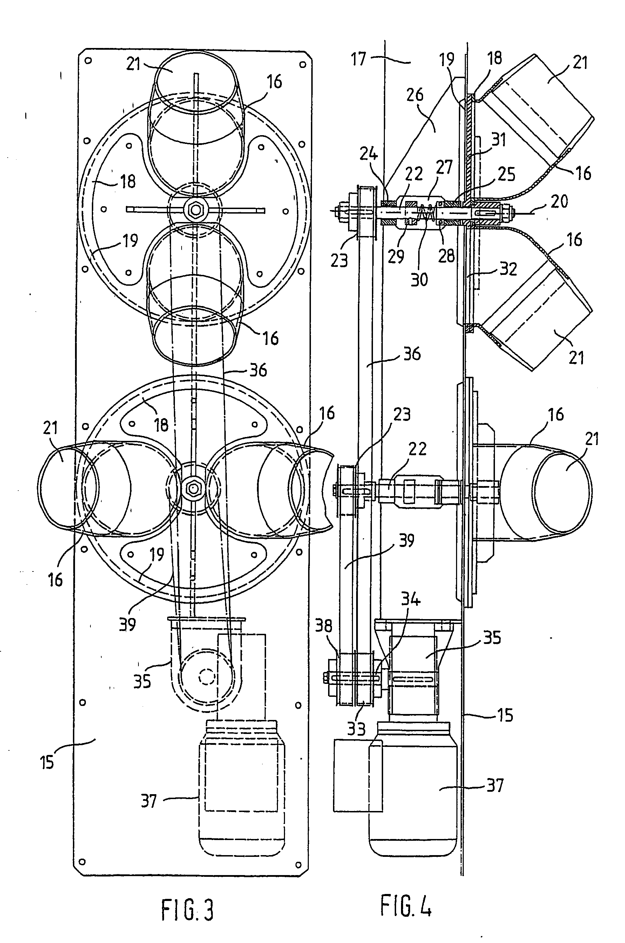

In den Figuren 3 und 4 ist eine Trocknungsvorrichtung mit doppelten Rotordüsen dargestellt. Bei diesem zweiten Ausführungsbeispiel der Erfindung sind an einer Frontplatte 15 mehrere kreisförmig bewegte Luftdüsen 16 mit kreisrundem Querschnitt angeordnet. Die Frontplatte 15 bildet zumindest einen Teil einer zum Fahrzeug gewandten Seitenwand eines Luftkastens 17, der entsprechend dem ersten Ausführungsbeispiel durch ein Gebläse mit Trocknungsluft gespeist wird. Jeweils zwei Luftdüsen 16 sind auf einer gemeinsamen Scheibe 18 befestigt, die über einer kreisförmigen Öffnung 19 der Frontplatte 15 um eine dazu senkrechte Drehachse 20 drehbar angeordnet ist. Die beiden Luftdüsen 16 sind auf der Scheibe 18 diametral gegenüberliegend und von der Drehachse 20 gleich beabstandet angeordnet. Durch Drehung der Scheibe 18 um die Drehachse 20 werden die beiden Luftdüsen 16 so auf einer kreisförmigen Bahn bewegt. Die Austrittsöffnungen 21 der beiden Luftdüsen 17 sind bei der dargestellten Ausführung um einen vorgegebenen Winkel entgegengesetzt zur Drehachse 20 geneigt.

Die Scheibe 18 ist an einem nach außen vorstehenden vorderen Wellenende einer zur Frontplatte 15 senkrechten Antriebswelle 22 drehfest montiert. An dem hinteren Wellenende der Antriebswelle 22 ist eine als Zahnscheibe 23 ausgeführte Antriebsscheibe befestigt. Die Antriebswelle 22 ist innerhalb zweier Lagerbuchsen 24 und 25 gelagert, die an einer mit der Frontplatte 15 fest verbundenen und von dieser senkrecht in den Luftkasten 17 ragenden Halteplatte 26 befestigt sind. Zwischen den beiden Lagerbuchsen 24 und 25 ist in der Halteplatte 26 eine Aussparung 27 vorgesehen, in der eine zwischen einem Axiallager 28 und einem Stellring 29 eingespannte Druckfeder 30 angeordnet ist. Durch die Druckfeder 30 wird die Antriebswelle 22 in Richtung ihres hinteren Wellenendes vorgespannt und somit auch die auf der Antriebswelle 22 befestigte Scheibe 18 an die Vorderseite der Frontplatte 15 angedrückt. Zwischen der Scheibe 18 und der Frontplatte 15 ist eine auf der Antriebswelle 22 drehbare Schieberplatte 31 mit einer halbkreisförmigen Öffnung 32 angeordnet. Durch diese Schieberplatte 31 wird nur jeweils der Luftdurchlaß zu der von oben nach unten bewegten Luftdüse 16 freigegeben.

Die Drehung der Luftdüsen 16 erfolgt über einen Zahnriementrieb, der einen zwischen der Zahnscheibe 23 auf der Antriebswelle 22 und einem Zahnriemenrad 33 auf der Abtriebswelle 34 eines Getriebes 35 verlaufenden Zahnriemen 36 enthält. Das Getriebe 35 ist am unteren Ende der Halteplatte 26 angeflanscht und wird von einem Motor 37 angetrieben.

Bei dem vorstehend beschriebenen Ausführungsbeispiel gemäß der Figuren 3 und 4 sind zwei untereinander angeordnete Scheiben 18 mit jeweils zwei diametral gegenüberliegenden Trocknungsdüsen 16 vorgesehen. Die beiden Scheiben 18 sind an dem vertikal verlaufenden Luftkasten 17 untereinanderliegend derart angeordnet, daß die beiden Luftdüsen 16 der oberen und unteren Scheiben um 90° zueinander versetzt ist. Das von den Luftdüsen 16 der oberen Scheibe 18 nach unten transportierte Wasser wird dann auf optimale Weise von den Luftdüsen 16 der unteren Scheibe 18 weiter transportiert, wodurch ein schneller Abtransport des Wassers gewährleistet wird. Der Antrieb der unteren Scheibe 18 erfolgt ebenfalls durch den Motor 37, wobei auf der Abtriebswelle 34 des Getriebes 35 ein weiteres Zahnriemenrad 38 vorgesehen ist. Durch dieses wird eine an der Antriebswelle 22 der unteren Scheibe 19 angeordnete Zahnscheibe 24 über einen weiteren Zahnriemen 39 angetrieben.

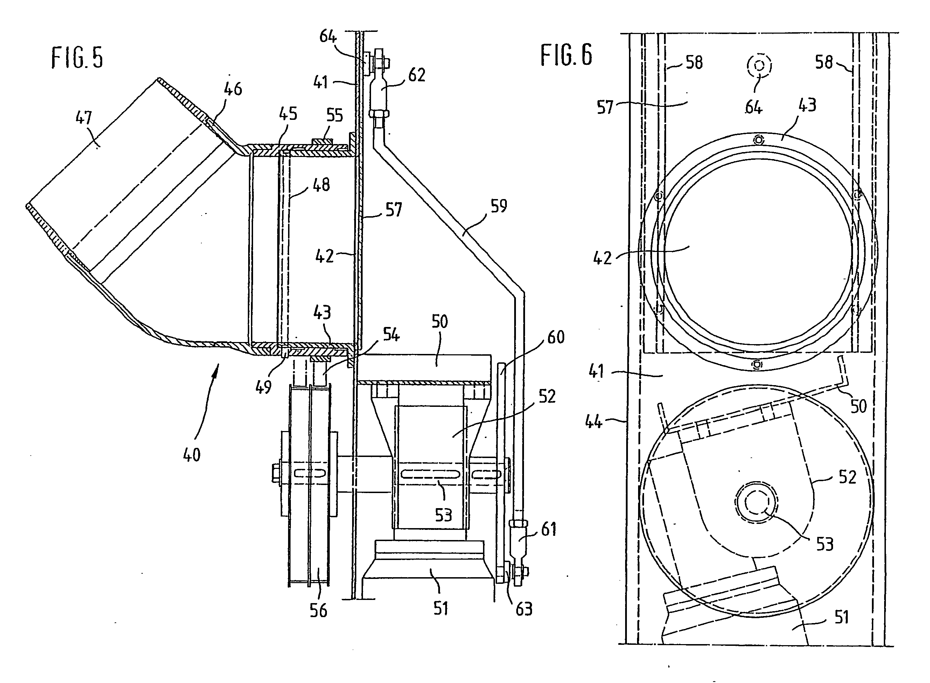

In den Figuren 5 und 6 ist ein drittes Ausführungsbeispiel der Erfindung mit einfacher Rotordüse gezeigt. Hier wird zur Reduzierung der Baugröße nur jeweils eine Trocknungsdüse 40 pro Rotationsachse eingesetzt. Dort ist an der Außenseite einer Frontplatte 41 über einer kreisförmigen Öffnung 42 ein nach außen vorstehender Rohrstutzen 43 befestigt. Die Frontplatte 41 bildet ebenfalls zumindest einen Teil einer zum Fahrzeug gewandten Seitenwand eines Luftkastens 44 der entsprechend den vorherigen Ausführungen durch ein hier nicht dargestelltes Gebläse mit Druckluft versorgt wird. Auf dem Rohrstutzen 43 ist ein gerades Rohrstück 45 der Trocknungsdüse 40 drehbar angeordnet. Auf das gerade Rohrstück 45 ist ein abgewinkelter Düsenkopf 46 mit einer gegenüber der Drehachse geneigten Austrittsöffnung 47 aufgesteckt. In dem Rohrstutzen 43 ist eine umlaufende äußere Ringnut 48 vorgesehen, in die ein an dem geraden Rohrstück 45 der Trocknungsdüse 40 angeordneter Querstift 49 eingreift. Dadurch wird eine axiale Sicherung der Trocknungsdüse 40 auf dem Rohrstutzen 43 erreicht.

Unterhalb der kreisförmigen Öffnung 42 ist an der Innenseite der Frontplatte 41 eine Halterung 50 befestigt, an der ein mit einem Motor 51 antriebsseitig verbundenes Getriebe 52 mit einer nach beiden Seiten vorstehenden Getriebeabtriebswelle 53 festgeschraubt ist. Die Drehung der Trocknungsdüse 40 erfolgt über einen Zahnriemen 54, der über ein an der Außenseite des geraden Rohrstücks 45 der Trocknungsdüse 40 angeordnetes erstes Zahnriemenrad 55 und ein auf dem in Figur 5 linken äußeren Wellenende der Getriebeabtriebswelle 53 befestigtes zweites Zahnriemenrad 56 verläuft. Je nach Anzahl der anzutreibenden Trocknungsdüsen können auf dem äußeren Ende der Abtriebswelle 53 auch noch weitere Zahnriemenräder angeordnet sein.

Auch bei der Ausführung gemäß Figuren 5 und 6 wird die Austrittsöffnung 47 der Trocknungsdüse 40 durch deren Drehung entlang einer kreisförmigen Bahn bewegt und führt somit eine Bewegung in Querrichtung der zu trocknenden Fahrzeugfläche aus. Zur Steuerung der Luftzufuhr zur Trocknungsdüse 40 ist eine an der Innenseite der Frontplatte 41 verschiebbar geführte Schieberplatte 57 vorgesehen, durch welche die Öffnung 42 in Abhängigkeit von der Drehstellung der Trocknungsdüse 40 geöffnet oder geschlossen wird. Die Schieberplatte 57 wird durch in Figur 6 gestrichelt dargestellte seitliche Führungsleisten 58 geführt. Die Verschiebung der Schieberplatte 57 erfolgt ebenfalls durch den Motor 51, der mit der Schieberplatte 57 über eine Art Kurbeltrieb gekoppelt ist. Dieser umfaßt eine abgewinkelte Antriebsstange 59, die mit ihrem einen Ende an der Schieberplatte 57 und mit ihrem anderen Ende an einer auf dem inneren Wellenende der Getriebeabtriebswelle 53 angeordneten Antriebsscheibe 60 zu deren Drehachse radial versetzt angelenkt ist. Die Antriebsstange 59 weist an ihren Enden jeweils Gelenkköpfe 61 und 62 auf, die mit entsprechenden Haltezapfen 63 bzw. 64 an der Antriebsscheibe 60 und der Schieberplatte 57 verbunden sind.

Die Kopplung zwischen dem Drehantrieb der Trocknungsdüse 40 und dem Antrieb der Schieberplatte 57 ist derart ausgelegt, daß die Trocknungsdüse 40 bei einer vollen Umdrehung um 360° nur innerhalb eines Winkelbereichs von 180° geöffnet ist. Bei der in Figur 5 gezeigten Stellung der Trocknungsdüse 40 mit schräg nach oben gerichteter Austrittsöffnung ist z.B. die Öffnung 42 vollkommen geschlossen. Bei einer weiteren Drehung der Trocknungsdüse 40 wird die Öffnung 42 dagegen durch Verschiebung der Schieberplatte 57 nach oben geöffnet, wobei durch die sich dann nach unten bewegenden Austrittsöffnung 47 Trocknungsluft strömen kann. Bei der anschließenden Aufwärtsbewegung der Austrittsöffnung 47 wird dagegen die Verbindung zur Trocknungsdüse wieder verschlossen. Auf diese Weise kann z.B. das auf den Seitenflächen eines Fahrzeugs befindliche Wasser auf besonders effektive Weise schnell nach unten abtransportiert werden.

Wie bereits vorstehend erläutert, ist die erfindungsgemäße Trocknungsvorrichtung jedoch nicht auf die Trocknung der Seitenflächen beschränkt, sondern kann in entsprechender Weise ebenfalls für die Trocknung der horizontalen Flächen eingesetzt werden. Auch die Anzahl der translatorisch oder rotatorisch bewegten Trocknungsdüsen kann an die jeweiligen Anforderungen angepaßt werden.

## Patentansprüche

1. Verfahren zum Trocknen von Fahrzeugen, bei dem sich das Fahrzeug und mindestens eine an einem Luftzuführungskanal (1; 17; 44) angeordnete Trocknungsdüse (5; 16; 40) mit einer auf das Fahrzeug gerichteten Austrittsöffnung (6; 21; 47) entlang der seitlichen oder oberen Fahrzeugflächen in deren Längsrichtung relativ zueinander bewegen, **dadurch gekennzeichnet, daß** die mindestens eine Trocknungsdüse (5; 16; 40) an einer zum Fahrzeug gewandten Seitenwand (11) des Luftzuführungskanals (1; 17; 44) translatorisch verschoben oder an der zum Fahrzeug gewandten Seitenwand (15; 41) des Luftzuführungskanals (1, 17, 44) um eine zur dieser senkrechten und zur Austrittsöffnung (21; 47) der Trocknungsdüse (16; 40) seitlich versetzten Drehachse (20) gedreht wird.

2. Verfahren nach Anspruch 1, **dadurch gekennzeichnet, daß** die mindestens eine Trocknungsdüse (5) an einem entlang der seitlichen Fahrzeugfläche bewegten Luftzuführungskanal (1) nach unten bewegt wird.

3. Verfahren nach Anspruch 1, **dadurch gekennzeichnet, daß** die mindestens eine Trocknungsdüse (5) an einem über die obere Fahrzeugfläche in Längsrichtung des Fahrzeugs bewegten Luftzuführungskanals (1) quer zur Längsachse des Fahrzeugs bewegt wird.

4. Verfahren nach einem der Ansprüche 1 bis 3, **dadurch gekennzeichnet, daß** mehrere voneinander beabstandete Trocknungsdüsen (5) an dem in Längsrichtung des Fahrzeugs bewegten Luftzuführungskanal (1; 17; 44) quer zu ihrer Austrittsöffnung (6) verschoben werden.

5. Verfahren nach einem der Ansprüche 1 bis 5, **dadurch gekennzeichnet, daß** mehrere voneinander beabstandete Trocknungsdüsen (16; 40) an dem in Längsrichtung des Fahrzeugs bewegten Luftzuführungskanal (1; 17; 44) um eine zu ihrer Austrittsöffnung (21; 47) seitlich versetzte Drehachse (20) gedreht werden.

6. Vorrichtung zur Durchführung eines Verfahren nach einem der Ansprüche 1 bis 5 mit mindestens einem entlang der seitlichen oder oberen Fahrzeugflächen in deren Längsrichtung relativ beweglichen Luftzuführungskanal (1; 17; 44) und mindestens einer an dem Luftzuführungskanal (1; 17; 44) angeordneten Trocknungsdüse (5; 16; 40) mit einer zu Fahrzeug gerichteten Austrittsöffnung (6; 21; 47), **dadurch gekennzeichnet, daß** die mindestens eine Trocknungsdüse (5; 16; 40) an einer zum Fahrzeug gewandten Seitenwand (11) des Luftzuführungskanals (1; 17; 41) in Querrichtung der seitlichen oder oberen Fahrzeugflächen translatorisch verschiebbar oder der zum Fahrzeug gewandten Seitenwand (15; 41) um eine zu dieser senkrechten und zur Austrittsöffnung (21; 47) der Trocknungsdüse (16; 40) seitlich versetzten Drehachse (20) drehbar am Luftzuführungskanal (1, 17; 44) angeordnet ist.

7. Vorrichtung nach Anspruch 6, **dadurch gekennzeichnet, daß** mehrere voneinander beabstandete Trocknungsdüsen (5) an einer zum Fahrzeug gewandten Seitenfläche (11) des Luftzuführungskanals (1) translatorisch verschiebbar angeordnet sind.

8. Vorrichtung nach Anspruch 7, **dadurch gekennzeichnet, daß** die Trocknungsdüsen (5) über ein motorisch angetriebenes Transportband (4) verfahrbar am Luftzuführungskanal (1) angeordnet sind.

9. Vorrichtung nach Anspruch 8, **dadurch gekennzeichnet, daß** das Transportband (4) über eine dem Fahrzeug zugewandte Seitenwand (11) des Luftzuführungskanals (1) verläuft, in der eine Öffnung (13) für den Luftdurchgang zu den Trocknungsdüsen (5) angeordnet ist.

10. Vorrichtung nach Anspruch 6, **dadurch gekennzeichnet, daß** an einer dem Fahrzeug zugewandten Seitenwand (15; 41) des Luftzuführungskanals (17; 44) mehrere Trocknungsdüsen (16; 40) um eine zu ihrer Austrittsöfnung (21; 47) seitlich versetzte Drehachse (20) drehbar angeordnet sind.

11. Vorrichtung nach Anspruch 10, **dadurch gekennzeichnet, daß** an den drehbaren Trocknungsdüsen (16; 40) eine verstellbare Schieberplatte (31; 57) zur Steuerung der Luftzuführung in Abhängigkeit von deren Drehstellung angeordnet ist.

12. Vorrichtung nach Anspruch 11, **dadurch gekennzeichnet, daß** die Schieberplatte (57) über einen Verstellmechanismus (59, 60) mit einem Drehantrieb (51; 52) der Trocknungsdüsen (40) gekoppelt ist.

13. Vorrichtung nach einem der Ansprüche 10 bis 12, **dadurch gekennzeichnet, daß** jeweils zwei gegenüberliegende Trocknungsdüsen (16) auf einer gemeinsamen Scheibe (18) befestigt sind, die über einer Öffnung (19) der Seitenwand (15) um eine dazu senkrechte Drehachse (20) drehbar ist.

14. Vorrichtung nach Anspruch 13, **dadurch gekennzeichnet, daß** die Austrittsöffnungen (21) der beiden gegenüberliegenden Trocknungsdüsen (16) zur Drehachse (20) entgegengesetzt geneigt sind.

15. Vorrichtung nach Anspruch 13 oder 14, **dadurch gekennzeichnet, daß** an dem Luftzuführungskanal (17; 44) mehrere voneinander beabstandete Scheiben (18) mit zwei gegenüberliegenden Luftdüsen (16) angeordnet sind.

16. Vorrichtung nach Anspruch 15, **dadurch gekennzeichnet, daß** die Trocknungsdüsen (16) zweier nebeneinander angeordneter Scheiben (18) um 90° zueinander versetzt sind.

17. Vorrichtung nach einem der Ansprüche 6 bis 16, **dadurch gekennzeichnet, daß** die Trocknungsdüsen (5; 16; 40) durch einen gemeinsamen Motor (10; 37; 51) relativ zum Luftzuführungskanal (1; 17; 44) bewegbar sind.

18. Vorrichtung nach einem der Ansprüche 6 bis 17, daß die mindestens eine Trocknungsdüse (5; 16; 40) eine kreisrunde Austrittsöffnung (6; 21; 47) aufweist.

## Claims

1. Method for drying vehicles in which the vehicle and at least one drying nozzle (5; 16; 40) arranged on an air supply duct (1; 17; 44) and having an outlet opening (6; 21; 47) directed towards the vehicle move relative to one another along the lateral or upper surfaces of the vehicle in the longitudinal direction thereof, **characterised in that** the at least one drying nozzle (5; 16; 40) is displaced translationally on a side wall (11) of the air supply duct (1; 17; 44) facing the vehicle or is turned on the side wall (15; 41) of the air supply duct (1; 17; 44) facing the vehicle about a pivot axis (20) perpendicular to this side wall and offset laterally to the outlet opening (21; 47) of the drying nozzle (16; 40).

2. Method according to claim 1, **characterised in that** the at least one drying nozzle (5) is moved downwards on an air supply duct (1) moved along the lateral surface of the vehicle.

3. Method according to claim 1, **characterised in that** the at least one drying nozzle (5) is moved transversely to the longitudinal axis of the vehicle on an air supply duct (1) moved over the upper surface of the vehicle in the longitudinal direction of the vehicle.

4. Method according to one of claims 1 to 3, **characterised in that** a plurality of spaced drying nozzles (5) are displaced transversely to their outlet opening (6) on the air supply duct (1; 17; 44) moved in the longitudinal direction of the vehicle.

5. Method according to one of claims 1 to 5 *[sic]*, **characterised in that** a plurality of spaced drying nozzles (16; 40) are turned about a pivot axis (20) offset laterally to their outlet opening (21; 47) on the air supply duct (1; 17; 44) moved in the longitudinal direction of the vehicle.

6. Device for implementing a method according to one of claims 1 to 5 with at least one air supply duct (1; 17; 44) movable relatively along the lateral or upper surfaces of the vehicle in the longitudinal direction thereof and at least one drying nozzle (5; 16; 40) arranged on the air supply duct (1; 17; 44) and having an outlet opening (6; 21; 47) directed towards the vehicle, **characterised in that** the at least one drying nozzle (5; 16; 40) is displaceable translationally in the transverse direction of the lateral or upper surfaces of the vehicle on a side wall (11) of the air supply duct (1; 17; 41) facing the vehicle or is arranged on the side wall (15; 41) facing the vehicle so as to be pivotable on the air supply duct (1; 17; 44) about a pivot axis (20) perpendicular to this side wall and offset laterally to the outlet opening (21; 47) of the drying nozzle (16; 40).

7. Device according to claim 6, **characterised in that** a plurality of spaced drying nozzles (5) are arranged so as to be displaceable translationally on a side surface (11) of the air supply duct (1) facing the vehicle.

8. Device according to claim 7, **characterised in that** the drying nozzles (5) are arranged so as to be displaceable on the air supply duct (1) by means of a motor-driven conveyor belt (4).

9. Device according to claim 8, **characterised in that** the conveyor belt (4) runs over a side wall (11) of the air supply duct (1) which faces the vehicle and in which is arranged an opening (13) for the passage of air to the drying nozzles (5).

10. Device according to claim 6, **characterised in that** a plurality of drying nozzles (16; 40) are arranged so as to be pivotable about a pivot axis (20) offset laterally to their outlet opening (21; 47) on a side wall (15; 41) of the air supply duct (17; 44) facing the vehicle.

11. Device according to claim 10, **characterised in that** an adjustable slide plate (31; 57) is arranged on the pivotable drying nozzles (16; 40) to control the air supply depending on the rotational position thereof.

12. Device according to claim 11, **characterised in that** the slide plate (57) is coupled with a pivoting drive (51; 52) of the drying nozzles (40) by means of an adjusting mechanism (59, 60).

13. Device according to one of claims 10 to 12, **characterised in that** in each case two facing drying nozzles (16) are fastened on a common disc (18) which is pivotable by means of an opening (19) of the side wall (15) about a pivot axis (20) perpendicular thereto.

14. Device according to claim 13, **characterised in that** the outlet openings (21) of the two facing drying nozzles (16) are inclined to the pivot axis (20) in opposite directions.

15. Device according to claim 13 or 14, **characterised in that** a plurality of spaced discs (18) with two facing air nozzles (16) are arranged on the air supply duct (17; 44).

16. Device according to claim 15, **characterised in that** the drying nozzles (16) of two adjacent discs (18) are offset to one another by 90°.

17. Device according to one of claims 6 to 16, **characterised in that** the drying nozzles (5; 16; 40) are movable relative to the air supply duct (1; 17; 44) by a common motor (10; 37; 51).

18. Device according to one of claims 6 to 17, **characterised in that** the at least one drying nozzle (5; 16; 40) exhibits a circular outlet opening (6; 21; 47).

## Revendications

1. Procédé de séchage de véhicules, dans lequel le véhicule et au moins une buse de séchage (5 ; 16 ; 40) disposée sur un canal d'amenée d'air (1 ; 17 ; 44) comprenant une ouverture de sortie (6 ; 21 ; 47) orientée vers le véhicule se déplacent l'un par rapport à l'autre le long des surfaces latérales ou supérieures du véhicule dans leur direction longitudinale, **caractérisé en ce que** la au moins une buse de séchage (5 ; 16 ; 40) est déplacée en translation sur une paroi latérale (11), tournée vers le véhicule, du canal d'amenée d'air (1 ; 17 ; 44) ou amenée en rotation sur la paroi latérale (15 ; 41) opposée au véhicule autour d'un axe de rotation (20) perpendiculaire à ladite paroi et décalé latéralement par rapport à l'ouverture de sortie (21 ; 47) de la buse de séchage (16 ; 40) et verticale par rapport à celle-ci.

2. Procédé selon la revendication 1, **caractérisé en ce que** la au moins une buse de séchage (5) est déplacée vers le bas sur un canal d'amenée d'air (1) déplacé le long de la surface latérale du véhicule.

3. Procédé selon la revendication 1, **caractérisé en ce que** la au moins une buse de séchage (5) est déplacée sur un canal d'amenée d'air (1) déplacé au-dessus de la surface supérieure du véhicule dans la direction longitudinale du véhicule transversalement à l'axe longitudinal du véhicule.

4. Procédé selon l'une quelconque des revendications 1 à 3, **caractérisé en ce que** plusieurs buses de séchage (5) espacées les unes des autres sont déplacées sur le canal d'amenée d'air (1 ; 17 ; 44) déplacé dans la direction longitudinale du véhicule transversalement à leur ouverture de sortie (6).

5. Procédé selon l'une quelconque des revendications 1 à 5, **caractérisé en ce que** plusieurs buses de séchage (16 ; 40) espacées les unes des autres sont amenées en rotation sur le canal d'amenée d'air (1 ; 17 ; 44) déplacé dans la direction longitudinale du véhicule autour d'un axe de rotation (20) décalé latéralement par rapport à leur ouverture de sortie (21 ; 47).

6. Dispositif destiné à réaliser un procédé selon l'une quelconque des revendications 1 à 5 comprenant au moins un canal d'amenée d'air (1 ; 17 ; 44) mobile le long des surfaces latérales ou supérieures du véhicule dans leur direction longitudinale et au moins une buse de séchage (5 ; 16 ; 40) disposée sur le canal d'amenée d'air (1 ; 17 ; 44) comprenant une ouverture de sortie (6 ; 21 ; 47) orientée vers le véhicule, **caractérisé en ce que** la au moins une buse de séchage (5 ; 16 ; 40) est disposée sur le canal d'amenée d'air (1, 17 ; 44) de manière à pouvoir se déplacer en translation sur une paroi latérale (11), tournée vers le véhicule, du canal d'amenée d'air (1 ; 17 ; 41) dans la direction transversale des surfaces latérales ou supérieures ou la paroi latérale (15 ; 41), tournée vers le véhicule, de manière à pouvoir tourner autour d'un axe de rotation (20) perpendiculaire à ladite paroi et décalé latéralement par rapport à l'ouverture de sortie (21 ; 47) de la buse de séchage (16 ; 40).

7. Dispositif selon la revendication 6, **caractérisé en ce que** plusieurs buses de séchage (5) espacées les unes des autres sont disposées de manière à pouvoir se déplacer en translation sur une surface latérale (11), tournée vers le véhicule, du canal d'amenée d'air (1).

8. Dispositif selon la revendication 7, **caractérisé en ce que** les buses de séchage (5) sont disposées sur le canal d'amenée d'air (1) de manière à pouvoir se déplacer au-dessus d'une bande de transport (4) entraînée par un moteur.

9. Dispositif selon la revendication 8, **caractérisé en ce que** la bande de transport (4) s'étend au-dessus d'une paroi latérale (11), tournée vers le véhicule, du canal d'amenée d'air (1), paroi dans laquelle est disposée une ouverture (13) pour le passage de l'air en direction des buses de séchage (5).

10. Dispositif selon la revendication 6, **caractérisé en ce que** plusieurs buses de séchage (16 ; 40) sont disposées sur une paroi latérale (15 ; 41), tournée vers le véhicule, du canal d'amenée d'air (17 ; 44) de manière à pouvoir tourner autour d'un axe de rotation (20) décalé latéralement par rapport à leur ouverture de sortie (21 ; 47).

11. Dispositif selon la revendication 10, **caractérisé en ce qu'**une plaque coulissante (31 ; 57) mobile est disposée sur les buses de séchage rotatives (16 ; 40) pour commander l'amenée d'air en fonction de leur position rotative.

12. Dispositif selon la revendication 11, **caractérisé en ce que** la plaque coulissante (57) est couplée par un mécanisme de déplacement (59, 60) à un entraînement rotatif (51 ; 52) des buses de séchage (40).

13. Dispositif selon l'une quelconque des revendications 10 à 12, **caractérisé en ce que** respectivement deux buses de séchage opposées (16) sont fixées sur un disque commun (18), qui peut tourner au-dessus d'une ouverture (19) de la paroi latérale (15) autour d'un axe de rotation (20) perpendiculaire à celle-ci.

14. Dispositif selon la revendication 13, **caractérisé en ce que** les ouvertures de sortie (21) des deux buses de séchage (16) opposées sont inclinées de manière opposée par rapport à l'axe de rotation (20).

15. Dispositif selon la revendication 13 ou 14, **caractérisé en ce que** plusieurs disques (18) espacés les uns des autres comprenant deux buses d'air (16) opposées sont disposés sur le canal d'amenée d'air (17 ; 44).

16. Dispositif selon la revendication 15, **caractérisé en ce que** les buses de séchage (16) de deux disques (18) juxtaposés sont décalées de 90° l'une par rapport à l'autre.

17. Dispositif selon l'une quelconque des revendications 6 à 16, **caractérisé en ce que** les buses de séchage (5 ; 16 ; 40) peuvent être déplacées par un moteur commun (10 ; 37 ; 51) par rapport au canal d'amenée d'air (1 ; 17 ; 44).

18. Dispositif selon l'une quelconque des revendications 6 à 17, **caractérisé en ce que** la au moins une buse de séchage (5 ; 16 ; 40) comprend une ouverture de sortie circulaire (6 ; 21 ; 47).
